# EUROPÄISCHE PATENTSCHRIFT

(11) **EP 0 493 527 B1**
(45) Veröffentlichungstag und Bekanntmachung des Hinweises auf die Patenterteilung: **15.12.1993**
(21) Anmeldenummer: 90915767.9
(22) Anmeldetag: 18.09.1990
(51) Int. Cl.: A41H 43/02, B65G 47/61

(54) **VERFAHREN UND VORRICHTUNG ZUM AUSRICHTEN UND GEMEINSAMEN VERARBEITEN VON BIEGESCHLAFFEN WERKSTÜCKLAGEN**
PROCESS AND DEVICE FOR ALIGNING AND JOINT PROCESSING OF LIMP WORKPIECE LAYERS
PROCEDE ET DISPOSITIF POUR ALIGNER ET TRAITER CONJOINTEMENT DES NAPPES DE PIECES MOLLES

(30) Priorität: 22.09.1989 DE 3931662
(43) Veröffentlichungstag der Anmeldung: 08.07.1992
(73) Patentinhaber: MOLL, Philipp, D-52078 Aachen (DE)
(72) Erfinder: MOLL, Philipp, D-52078 Aachen (DE)
(74) Vertreter: Klein, Friedrich
(86) Internationale Anmeldenummer: EP9001588
(87) Internationale Veröffentlichungsnummer: WO9103958

(56) Entgegenhaltungen:
- EP-A- 0 260 331

## Beschreibung

Verfahren und Vorrichtung zum Ausrichten und gemeinsamen Verarbeiten von biegeschlaffen Werkstücklagen

Die Erfindung bezieht sich auf ein Verfahren nach dem Oberbegriff des Anspruchs 1, sowie auf eine Vorrichtung zur Durchführung des Verfahrens. Ein derartiges Verfahren und eine solche Vorrichtung sind aus der EP-OS 0 260 331 bekannt.

Bei dem bekannten Verfahren werden die Werkstücklagen mittels Fördereinrichtungen aufeinanderzugeführt, die auf Schienen geführte Laufwagen umfassen, an denen jeweils Klammern angebracht sind, die das obere Ende der Werkstücklagen halten. Diese Fördereinrichtungen weisen parallel zueinander geführte Bahnabschnitte in einer Abtast- und einer Ausrichtstation auf. Zur Ermöglichung einer gegenseitigen Ausrichtung der Werkstücklagen sind die Klammern an den Laufwagen einer der Fördereinrichtungen mittels eines Haltekopfes angebracht, der in mehreren Richtungen gegenüber dem ihn tragenden Laufwagen beweglich ist. Dieser Haltekopf trägt eine magnetisierbare Platte, die in der Ausrichtstation an einem Permanentmagneten, der an dem benachbarten Laufwagen der anderen Fördereinrichtung befestigt ist, reibschlüssig in Anlage gelangt. Mittels einer Stelleinrichtung der ortsfesten Ausrichtstation wird der bewegliche Haltekopf der Klammern an den erstgenannten Laufwagen entsprechend dem Abtastergebnis, so verstellt, daß die beiden in der Ausrichtstation einander benachbarten Werkstücklagen die vorbestimmte Relativposition erreichen. Aufgrund des Reibschlusses zwischen der magnetisierbaren Platte an dem Haltekopf des einen Laufwagens und dem Permanentmagneten am anderen Laufwagen wird diese Relativposition beibehalten, wenn sich die beiden Laufwagen nach dem Ausrichten der Werkstücklagen gemeinsam aus der Ausrichtstation in eine nachfolgende Verarbeitungsstation bewegen.

Diese Konstruktion ist relativ aufwendig, da sie an jedem der Laufwagen der einen Fördereinrichtung einen in mehreren Richtungen verstellbaren Haltekopf erfordert. Darüber hinaus muß die Stelleinrichtung zum Verstellen der Halteköpfe zur Erzielung der vorgeschriebenen Relativposition der beiden Werkstücklagen eine beachtliche Kraft aufbringen, um die Reibungskraft zwischen der magnetisierbaren Platte und dem Permanentmagneten überwinden zu können, die, wie erläutert, so groß sein muß, daß die einmal eingestellte Relativlage zwischen Permanentmagnet und Platte und damit die Ausrichtlage der Werkstücklagen aufrechterhalten bleibt.

Der Erfindung liegt die Aufgabe zugrunde, ein Verfahren der eingangs genannten Art anzugeben, das so ausgestaltet ist, daß es mit einer einfach aufgebauten Vorrichtung ausführbar ist.

Diese Aufgabe wird durch die kennzeichnenden Merkmale des Anspruchs 1 gelöst. Eine vorteilhafte Ausgestaltung der Erfindung ist Gegenstand der davon abhängigen Ansprüche. Hierbei wird durch die in den Ansprüchen 2 und 3 angegebene Maßnahme, die Ausrichtbewegungen gegensinnig ablaufen zu lassen, eine Reduzierung der Gesamtausrichtzeit erzielt. Bei der im Anspruch 2 genannten Bezugslinie kann es sich beispielsweise um die Bewegungsbahn einer sich relativ zu den ausgerichteten Werkstücklagen geradlinig bewegenden Nähmaschine handeln. Sofern auch die winkelmäßige Ausrichtung der Werkstücklagen gemäß Anspruch 3 durch gegensinnig ablaufende Ausrichtbewegungen erfolgt und die Bezugslinie hierbei die Winkelhalbierende der jeweiligen Ausgangslage einer bestimmten Kante der Werkstücklagen ist, kann es für den Fall, daß die Werkstücklagen durch eine relativ zu diesen geradlinig bewegte Nähmaschine miteinander verbunden werden, zweckmäßig sein, die Bewegungsbahn der Nähmaschine durch entsprechendes Schwenken einer die Nähmaschine tragenden Führungsschiene anzupassen.

Weiterhin liegt der Erfindung die Aufgabe zugrunde, eine Vorrichtung zur Ausführung des Verfahrens anzugeben, die einfach aufgebaut ist und keine großen Stellkräfte beim Ausrichten der Werkstücklagen erfordert.

Ausgehend von einer Vorrichtung nach dem Oberbegriff des Anspruchs 5, die gleichfalls in der EP-OS 0 260 331 beschrieben ist, wird diese Aufgabe durch die kennzeichnenden Merkmale des Anspruchs 5 gelöst. Ausgestaltungen der Vorrichtung sind Gegenstand der davon abhängigen Ansprüche.

Die Erfindung enthält eine gelenkig bewegliche Einrichtung nur an der Abtast- und Ausrichtstation, während die Halteeinrichtungen an den Laufwagen im wesentlichen "starr" sind. Beim Ausrichten brauchen keine Haft- und Gleitreibungskräfte zwischen Magnet und magnetisierbarer Platte überwunden zu werden, da beim Ausrichten die Reibung zwischen den Halteeinrichtungen der auszurichtenden Werkstücklage(n) und dem (den) zugehörigen, z. B. als Laufwagen ausgebildeten Transportmittel aufgehoben wird. Die Halteeinrichtung wird zusammen mit dem Werkstück von dem Transportmittel völlig gelöst, ausgerichtet und dann wieder an das Transportmittel übergeben, wo sie aufgrund der vom Magneten hervorgebrachten Kraft unter Reibschluß haften bleibt und ihre daran eingenommene Stellung beibehält.

Die Erfindung wird nachfolgend unter Bezugnahme auf die Zeichnungen näher erläutert. Es zeigt:
- Fig. 1: eine Übersichtsdarstellung einer Anlage zum Zuführen von biegeschlaffen Werkstückteilen, beispielsweise Stoffzuschnitten, zu einer Abtast- und Ausrichtstation sowie zu einer nachfolgenden Verarbeitungsstation, die vorliegend ein Nähroboter ist,
- Fig. 2: eine Schnittdarstellung der Abtast- und Ausrichtstation, und
- Fig. 3: eine perspektivische Teildarstellung der wesentlichen Elemente der Ausrichtvorrichtung in der Abtast- und Ausrichtstation.

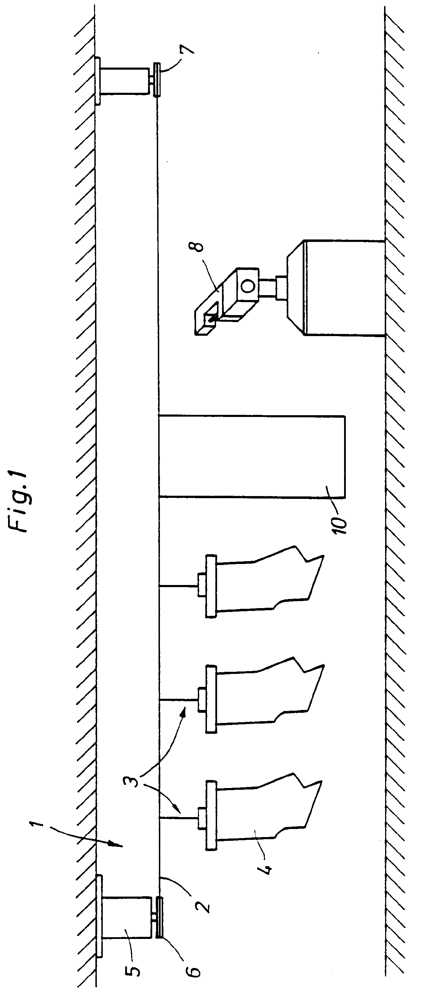

Man erkennt in Fig. 1 eine schematische Darstellung einer Fördereinrichtung 1, bei der mit Hilfe einer endlos umlaufenden Kette 2 eine Vielzahl von als Transportmittel dienenden Laufwagen 3 bewegt werden, an denen Werkstückteile 4 hängen. Im vorliegenden Falle sind zwar nur drei Laufwagen 3 dargestellt, es versteht sich aber, daß die Kette 2 in regelmäßigen Abständen mit solchen Laufwagen 3 bestückt ist. Die Kette 2 läuft auf einem endlosen Weg um ein von einem Motor 5 angetriebenes Rad 6 und ein im Abstand davon angeordnetes Umlenkrad 7. Im Laufweg der Kette 2 befindet sich eine Abtast- und Ausrichtstation 10, und stromabwärts davon, in Bewegungsrichtung der Kette 2 gesehen, ein Nähroboter 8.

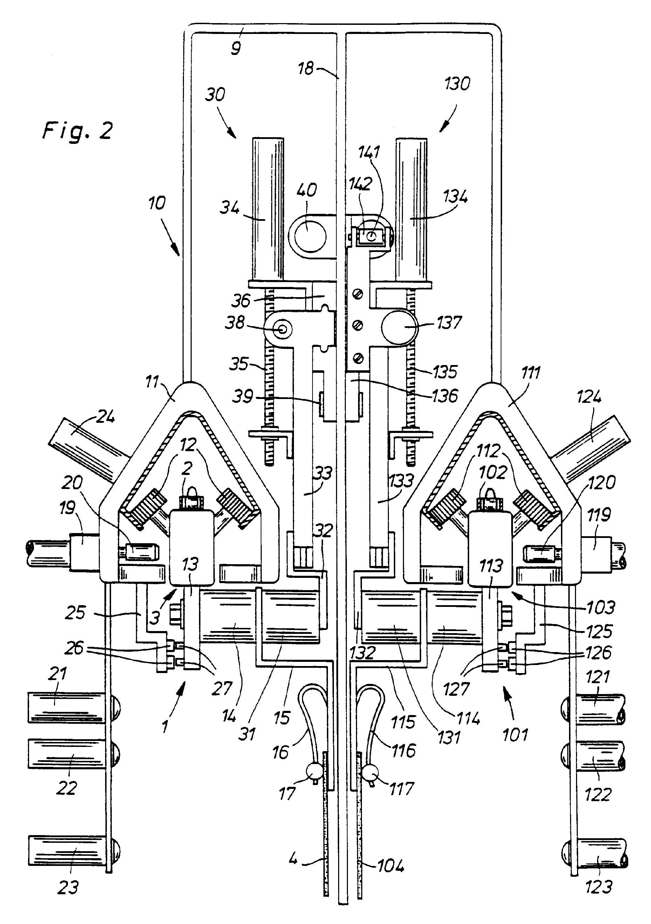

Es ist anzumerken, daß in Fig. 1 nur eine Fördereinrichtung dargestellt ist, deren Transportweg durch die Abtast- und Ausrichtstation 10 verläuft. Für die Ausführung des erfindungsgemäßen Verfahrens sind indessen wenigstens zwei der dargestellten Fördereinrichtungen vorgesehen, von denen auch die zweite einen Bahnabschnitt aufweist, der sich durch die Abtast- und Ausrichtstation 10 erstreckt. Aus Übersichtlichkeitsgründen ist die zweite Fördereinrichtung in Fig. 1 nicht dargestellt. Sie ist indessen in Fig. 2 erkennbar.

Man sieht in Fig. 2 in einer stirnseitigen Ansicht die Abtast- und Ausrichtstation 10. Durch diese verlaufen parallel zueinander zwei Leitschienen 11 und 111, die an einem gemeinsamen Traggerüst 9 befestigt sind. Von den Leitschienen 11 und 111 werden Laufwagen 3 und 103 geführt, die zu zwei getrennten, insgesamt mit 1 bzw. 101 bezeichneten Fördereinrichtungen gehören. Jeder Laufwagen 3 bzw. 103 ist mit Laufrädern 12 bzw. 112 versehen, die die Laufwagen 3 bzw. 103 an den Leitschienen 11 bzw. 111 führen.

Nachfolgend wird nur einer der Laufwagen und werden die ihm zugeordneten Elemente beschrieben. Da der andere Laufwagen und die ihm zugeordneten Elemente völlig vergleichbar sind, sind sie jeweils mit einem um 100 erhöhten Bezugszeichen versehen.

Am Laufwagen 3 ist eine Halteplatte 13 befestigt, und diese trägt einen Permanentmagneten 14, der von einer in Fig. 2 nicht erkennbaren Spule umgeben ist, mit deren Hilfe ein dem Magnetfeld des Permanentmagneten 14 entgegengesetztes Magnetfeld erzeugt werden kann, um die magnetische Wirkung des Permanentmagneten 14 aufzuheben. Zur Stromversorgung der Spule dienen zwei an einer Halterung 25 ortsfest angeordnete Stromschienen 26, die mit zwei an der Halteplatte 13 angeordneten und mit der Spule elektrisch leitend verbundenen Schleifkontakten 27 zusammenwirken. Von dem Permanentmagneten 14 wird durch die von ihm entwickelte magnetische Haltekraft eine Trägerplatte 15 aus einem ferromagnetischen Material getragen, an der eine Klammer 16 mit verschiebbarem Klemmkörper 17 befestigt ist. Die Klammer 16 mit dem verschiebbaren Klemmkörper 17 kann zwischen sich und der Trägerplatte 15 eine biegeschlaffe Werkstücklage 4 einklemmen, die von der Trägerplatte 15 nach unten hängt. Die herabhängende Werkstücklage 4 erstreckt sich hierbei in einer vertikalen Ebene, die mit geringem Abstand parallel zu einer ebenfalls vertikal verlaufenden Zwischenplatte 18 verläuft, welche am Traggerüst 9 befestigt ist und wenigstens teilweise optisch reflektierend ausgebildet ist.

An der Leitschiene 11 ist seitlich ein Druckluftzylinder 19 befestigt, der ein Druckstück 20 aufweist, das gegen den Laufwagen 3 vorgeschoben werden kann, um diesen in der Abtast- und Ausrichtstation 10 in seiner Lage zu fixieren. Der Druckluftzylinder 19 ist mit einer bekannten und deshalb hier nicht dargestellten Steuereinrichtung verbunden. An der Leitschiene 11 sind weiterhin mit der Zwischenplatte 18 zusammenwirkende Reflexlichtschranken 21, 22, 23 in einem örtlichen Bereich befestigt, der jenem benachbart ist, den eine Werkstücklage 4 einnimmt, wenn sie sich in der Abtast- und Ausrichtstation 10 befindet. Die Reflexlichtschranken 21, 22, 23 sind somit in der Lage, die Ausrichtung der Werkstücklage 4 zu erfassen und entsprechende Signale abzugeben. Die Reflexlichtschranken 21, 22, 23 sind ebenfalls mit der schon erwähnten Steuereinrichtung verbunden. In Nachbarschaft zu der Position, die der Laufwagen 3 in der Abtast- und Ausrichtstation 10 einnimmt, ist an der Leitschiene 11 eine Reflexlichtschranke 24 angeordnet, die dem Erkennen des Laufwagens 3 dient. Auch diese ist an die schon erwähnte Steuereinrichtung angeschlossen.

Am Traggerüst 9 ist in der Abtast- und Ausrichtstation 10 eine insgesamt mit 30 bezeichnete Ausrichtvorrichtung angeordnet. Die Ausrichtvorrichtung 30 umfaßt einen Elektromagneten 31, mit dessen Hilfe ein Magnetfeld aufgebaut werden kann, das in der Lage ist, die Trägerplatte 15 mit der daran hängenden Werkstücklage 4 zu tragen. Der Elektromagnet 31 befindet sich in der Abtast- und Ausrichtstation 10 an einer Stelle, die der Trägerplatte 15 gegenübersteht, wenn diese sich in der Stellung befindet, die von dem Laufwagen 3 bestimmt wird, wenn dieser von dem Druckstück 20 am Druckluftzylinder 19 in der Abtast- und Ausrichtstation 10 fixiert wird. Der Elektromagnet 31, der nachfolgend als im wesentlichen ortsfest bezeichnet werden soll, um ihn von dem vom Laufwagen 3 mitgeführten, somit "beweglichen" Permanentmagneten 14 deutlich zu unterscheiden, ist an einem Halter 32 befestigt, der elektromotorisch in mehreren Richtungen in einer Ebene verstellt werden kann, die sich parallel zu der von der Werkstücklage 4 bestimmten Ebene erstreckt.

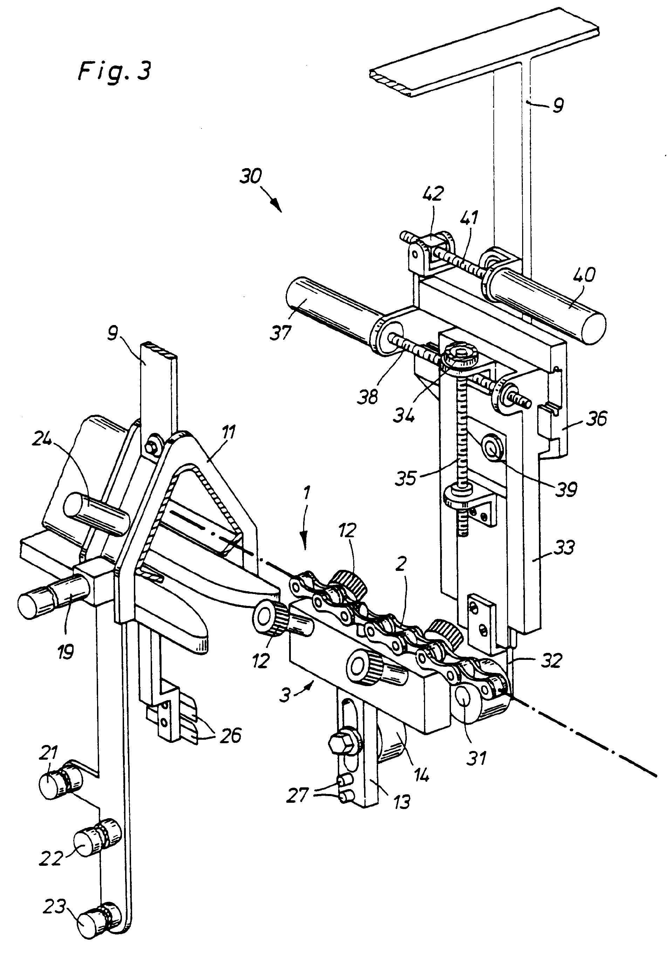

Wie Fig. 3 zeigt, ist der Halter 32 in einer ersten Schiene 33 längs verschiebbar geführt, die sich im wesentlichen vertikal erstreckt. An der Schiene 33 ist ein Elektromotor 34 (siehe auch Fig. 2) befestigt, mit dessen Hilfe über eine Gewindespindel 35 der Halter 32 in vertikaler Richtung verstellt werden kann. Die Schiene 33 ist an einer zweiten Schiene 36 in im wesentlichen horizontaler Richtung verschiebbar geführt. Die Verschiebung der ersten Schiene 33 gegenüber der zweiten Schiene 36 wird mittels eines an der zweiten Schiene 36 befestigten Elektromotors 37 und einer Gewindespindel 38 bewirkt. Der Elektromagnet 31 ist somit in zwei zueinander senkrechten Richtungen nach Art einer Kreuzschlittenführung beweglich.

Die zweite Schiene 36 ist mittels eines Drehzapfens 39 an dem Traggerüst 9 verschwenkbar gelagert, wobei die Schwenkebene in jener Ebene liegt, in der der Elektromagnet 31 mittels der Gewindespindeln 35 und 38 bewegt werden kann. Eine Schwenkbewegung der zweiten Schiene 36 ist mittels eines dritten Elektromotors 40 hervorrufbar, der an dem Traggerüst 9 gelenkig befestigt ist und eine dritte Gewindespindel 41 antreibt, die einen Gewindeblock 42 durchsetzt, der an der zweiten Schiene 36 gelenkig angebracht ist.

Die genannten Elektromotoren 34, 37 und 40 sind zweckmäßigerweise Schrittmotoren, da solche sich hochgenau einstellen lassen und insbesondere für eine digitale Ansteuerung besonders geeignet sind. Diese Elektromotoren sind ebenfalls mit der schon erwähnten Steuereinrichtung verbunden und werden von dieser in Abhängigkeit von den von den Reflexlichtschranken 21, 22, 23 gelieferten Signalen verstellt.

Es lassen sich somit folgende Bewegungen des Elektromagneten 31 hervorrufen: a) mit Hilfe des ersten Elektromotors 34 eine Auf- und Abbewegung in der von der ersten Gewindespindel 35 bestimmten Richtung, b) eine Bewegung im wesentlichen parallel zur Bewegungsbahn des Laufwagens 3 mit Hilfe des zweiten Elektromotors 37 in der durch die zweite Gewindespindel 38 bestimmten Richtung, und c) eine Schwenkbewegung um den Drehzapfen 39 mit Hilfe des dritten Elektromotors 40 und der von diesem angetriebenen dritten Gewindespindel 41.

Die Arbeitsweise der dargestellten Vorrichtung ist wie folgt:

Im normalen Transportzustand der Werkstücklagen 4, wie in Fig. 1 dargestellt, sind die Spulen an den Permanentmagneten 14, die von den Laufwagen 3 getragen werden, nicht erregt, so daß die Permanentmagnete 14 die Trägerplatten 15 mit den daran hängenden Werkstücklagen 4 festhalten. Der Elektromagnet 31 ist nicht erregt. Wenn ein Laufwagen 3 in die Abtast- und Ausrichtstation 10 eingelaufen ist, wird die Kette 2 der Fördereinrichtung 1 vorrübergehend angehalten, so daß sämtliche von ihr mitgeführten Laufwagen 3 zum Stillstand kommen. In der Abtast- und Ausrichtstation 10 wird der dort befindliche Laufwagen 3 mit Hilfe des Druckstückes 20 in der stillgesetzten Lage fixiert. Es wird dann durch Erregung der dem Permanentmagneten 14 zugeordneten Spule das Magnetfeld des Permanentmagneten 14 neutralisiert. Gleichzeitig wird der Elektromagnet 31 erregt, so daß er nun die Trägerplatte 15 mit der daran hängenden Werkstücklage 4 festhält, während der Permanentmagnet 14 die Trägerplatte 15 freigegeben hat.

Gleichzeitig ist in die Abtast- und Ausrichtstation 10 von der anderen Fördereinrichtung, die in Fig. 2 insgesamt mit 101 bezeichnet ist, die mit der Werkstücklage 4 gemeinsam zu verarbeitende Werkstücklage 104 zugeführt und in der Abtast- und Ausrichtstation 10 zum Stillstand gebracht worden. Die Reflexlichtschranken 21, 22, 23 und 121, 122, 123 erfassen nun die Positionen der Werkstücklagen 4 und 104 und liefern entsprechende Meßsignale an die nicht dargestellte Steuereinrichtung. Von dieser werden die zum vorschriftsmäßigen Ausrichten der Werkstücklagen 4 und 104 erforderlichen Steuerbefehle ermittelt und als Signale an die Elektromotoren 34, 37 und 40 der Ausrichtvorrichtung 30 geliefert. Hierbei wird zunächst durch die Reflexlichtschranken 22, 23 bzw. 122, 123 die Winkellage der vorderen nach abwärts verlaufenden Kante der Werkstücklagen 4, 104 ermittelt und bei Abweichungen von der gewünschten Ausrichtlage durch Beaufschlagen des Elektromotors 40 und/oder 140 eine winkelmäßige Ausrichtung der Werkstücklagen 4, 104 vorgenommen. Danach wird mit Hilfe der Reflexlichtschranken 21, 23 bzw. 121, 123 einerseits die vertikale und andererseits die horizontale Relativlage der beiden Werkstücklagen 4, 104 ermittelt und bei Vorliegen einer Differenz durch Beaufschlagen der entsprechenden Elektromotoren 34; 37; 134; 137 eine gegenseitige Ausrichtung der Werkstücklagen 4, 104 durchgeführt. Die vertikale und horizontale Ausrichtung wird durch gleichzeitige gegensinnige Beaufschlagung der entsprechenden Elektromotoren 34, 134 bzw. 37, 137 der beiden Ausrichtvorrichtungen 30, 130 durchgeführt, wodurch die Ausrichtzeit auf ein Minimum reduziert wird.

Das Ausrichten der Werkstücklagen 4, 104 kann ausgeführt werden, ohne daß merkliche Reibungskräfte zwischen der jeweiligen Trägerplatte 15; 115 und dem entsprechenden Permanentmagneten 14; 114 auftreten, da dessen Magnetfeld durch das von der ihn umgebenden stromdurchflossenen Spule neutralisiert ist. Wenn die erforderliche Ausrichtung erreicht ist, wird die Erregung der genannten Spule aufgehoben, so daß der Permanentmagnet 14; 114 wieder seine Anziehkraft entwickelt, und es wird die Erregung des gegenüberliegenden Elektromagneten 31; 131 abgeschaltet, womit die Trägerplatte 15; 115 wieder an den Permanentmagneten 14; 114 übergeben wird. Die Haltekraft der Permanentmagnete 14; 114 ist, wie bereits erwähnt, ausreichend groß bemessen, so daß die Trägerplatte 15; 115 sich an ihm nicht verstellen kann. Anschließend werden die beiden Fördereinrichtungen 1, 101 wieder in Betrieb gesetzt, so daß die beiden Werkstücklagen 4 und 104 die Abtast- und Ausrichtstation 10 gemeinsam in zueinander ausgerichteter Position verlassen.

Es sei hervorgehoben, daß es für die Ausrichtung genügt, wenn eine der Werkstücklagen 4 oder 104 mit der entsprechenden in Fig. 3 dargestellten Ausrichtvorrichtung 30 bzw. 130 zur gegenseitigen Ausrichtung bewegt wird. Es ist nicht erforderlich, daß auch die andere Fördereinrichtung in der beschriebenen Weise ausgestaltet ist. Es kann somit beispielsweise auf die Permanentmagnete 114 an den Laufwagen 103 der anderen Fördereinrichtung 101 verzichtet werden, die Trägerplatten 115 können dort fest, d. h. unlösbar, mit den Laufwagen 103 verbunden sein, und die dieser Fördereinrichtung 101 zugeordnete Ausrichtvorrichtung 130 kann in der Abtast- und Ausrichtstation 10 fehlen. Reflexlichtschranken 121, 122, 123 zur Abtastung der Stofflage 104 müssen aber in jedem Falle vorhanden sein. Indessen hat die Vorrichtung in der in Fig. 2 dargestellten Ausführungsform, bei der die beiden Fördereinrichtungen 1, 101 einander gleichartig aufgebaut sind und in der Abtast- und Ausrichtstation 10 beiden Fördereinrichtungen 1, 101 eine Ausrichtvorrichtung 30 bzw 130 zugeordnet ist, den vorstehend beschriebenen Vorteil einer schnelleren Arbeitsweise und ggf. einer vergrößerten Korrekturmöglichkeit.

## Patentansprüche

1. Verfahren zum Ausrichten wenigstens zweier gemeinsam zu behandelnder oder miteinander zu verbindender biegeschlaffer Werkstücklagen, die in ebenflächig von Transportmitteln herabhängender Lage aufeinanderzugeführt und vor ihrer gegenseitigen Berührung in vertikaler und/oder in horizontaler Richtung relativ zueinander ausgerichtet werden, dadurch gekennzeichnet, daß wenigstens eine der Werkstücklagen vor dem Ausrichten von ihrem Transportmittel gelöst, anschließend in eine vorbestimmte Relativposition zur anderen Werkstücklage ausgerichtet und in ausgerichteter Lage wieder an ihr Transportmittel übergeben wird, und beide Werkstücklagen durch die Transportmittel anschließend gemeinsam der weiteren Verarbeitung zugeführt werden.

2. Verfahren nach Anspruch 1, dadurch gekennzeichnet, daß beide Werkstücklagen von ihrem jeweiligen Transportmittel gelöst, danach mit einer Kante oder Bezugspunkten einer Kante parallel zu einer vorgegebenen Bezugslinie und anschließend durch gegensinnig verlaufende, parallel und/oder senkrecht zu der Bezugslinie gerichtete Bewegungen relativ zueinander ausgerichtet werden.

3. Verfahren nach Anspruch 1, dadurch gekennzeichnet, daß beide Werkstücklagen von ihrem jeweiligen Transportmittel gelöst und danach durch gegensinnig verlaufende Bewegungen mit einer Kante oder Bezugspunkten einer Kante parallel zu einer die Winkelhalbierende der jeweiligen Ausgangslage dieser Kanten bildenden Bezugslinie sowie durch ebenfalls gegensinnig verlaufende, parallel und senkrecht zu dieser Bezugslinie gerichtete Bewegungen relativ zueinander ausgerichtet werden.

4. Verfahren nach einem der vorhergehenden Ansprüche 1 bis 3, dadurch gekennzeichnet, daß die Werkstücklage(n) im vorübergehenden Stillstand der Transportmittel von diesem bzw. diesen gelöst, ausgerichtet und wieder an das bzw. die Transportmittel übergeben wird bzw. werden.

5. Vorrichtung zur Durchführung des Verfahrens nach Anspruch 1, mit wenigstens zwei Fördereinrichtungen, die auf wenigstens einem Teilabschnitt ihrer Förderwege einander eng benachbart sind und die jeweils mehrere hintereinander angeordnete, z. B. als Laufwagen ausgebildete Transportmittel aufweisen, die jeweils mit Klammern zum Festhalten und Transportieren der Werkstücklagen in ebenflächig herabhängender Lage versehen sind, und mit einer Abtast- und Ausrichtstation in dem genannten Teilabschnitt des Förderweges, welche Einrichtungen zum Ermitteln der Relativlage der Werkstücklagen und davon gesteuerte Einrichtungen zum gegenseitigen Ausrichten dieser Werkstücklagen aufweist, gekennzeichnet durch folgende Merkmale:
a) die Klammern (16, 17; 116, 117) an den Transportmitteln (3; 103) wenigstens der einen Fördereinrichtung (1; 101) weisen jeweils einen magnetisierbaren Träger (15; 115) auf, der an dem zugehörigen Transportmittel (3; 103) von einem an diesem befestigten ersten Magneten (14; 114) reibschlüssig festgehalten ist, und
b) die Abtast- und Ausrichtstation (10) weist wenigstens eine Ausrichtvorrichtung (30; 130) mit wenigstens einem zweiten Magneten (31; 131) auf, dessen Magnetfeld zum Magnetfeld des ersten Magneten (14; 114) entgegengesetzt gerichtet und dessen Feldstärke zur Übergabe des Trägers (15; 115) an die Ausrichtvorrichtung (30; 130) im Wechsel mit der Feldstärke des ersten Magneten (14; 114) schaltbar ist, wodurch der zweite Magnet (31; 131) mit dem Träger (15; 115) der Klammer (16, 17; 116, 117) in reibschlüssige Verbindung bringbar und mit Stelleinrichtungen (34, 37, 40; 134, 137, 140) verbunden und durch diese in einer vertikalen, parallel zu dem innerhalb der Abtast- und Ausrichtstation (10) befindlichen Bahnabschnit der Fördereinrichtung (1; 101) verlaufenden Ebene bewegbar ist.

6. Vorrichtung nach Anspruch 5, dadurch gekennzeichnet, daß die Transportmittel (3; 103) beider Fördereinrichtungen (1; 101) gemäß Merkmal a) ausgestaltet sind, in der Abtast- und Ausrichtstation (10) beiden Fördereinrichtungen (1; 101) je eine Ausrichtvorrichtung (30; 130) gemäß Merkmal b) zugeordnet ist und die Stelleinrichtungen (34, 37, 40; 134, 137, 140) dieser Ausrichtvorrichtungen (30; 130) einander gegenläufig antreibbar sind.

7. Vorrichtung nach Anspruch 5 oder 6, dadurch gekennzeichnet, daß die Magnete (14; 114) an den Transportmitteln (3; 103) jeweils Permanentmagnete sind, die jeweils mit einer Spule zur Erzeugung eines dem Permanentmagneten entgegengerichteten Magnetfeldes versehen sind.

8. Vorrichtung nach Anspruch 7, dadurch gekennzeichnt, daß die mit Magneten (14; 114) versehenen Transportmittel (3; 103) mit ersten elektrischen Kontakteinrichtungen (27; 127) für die den Magneten (14; 114) zugeordneten Spulen versehen sind, und daß diese Kontakteinrichtungen (27; 127) mit in der Abtast- und Ausrichtstation (10) ortsfest angeordneten zweiten elektrischen Kontakteinrichtungen (26; 126) in Verbindung bringbar sind.

9. Vorrichtung nach Anspruch 8, dadurch gekennzeichnet, daß die Kontakteinrichtungen (26, 27; 126, 127) Schleifkontakteinrichtungen sind.

10. Vorrichtung nach einem der Ansprüche 5 bis 9, dadurch gekennzeichnet, daß der Halter (32; 132) des zweiten Magneten (31; 131) in einer ersten, im wesentlichen vertikal verlaufenden Schiene (33; 133) verschiebbar geführt ist.

11. Vorrichtung nach Anspruch 10, dadurch gekennzeichnet, daß die erste Schiene (33; 133) an einer querlaufenden zweiten Schiene (36; 136) verschiebbar geführt ist.

12. Vorrichtung nach Anspruch 11, dadurch gekennzeichnet, daß die zweite Schiene (36; 136) an einer ortsfesten Tragstruktur (9) schwenkbar gelagert ist.

13. Vorrichtung nach Ansprüche 5 bis 12, dadurch gekennzeichnet, daß die Ausrichtvorrichtung (30; 130) elektromotorisch angetrieben ist.

14. Vorrichtung nach Anspruch 13, dadurch gekennzeichnet, daß die Stelleinrichtungen als Schrittmotoren ausgebildete Elektromotoren (34, 37, 40; 134, 137, 140) aufweisen.

## Claims

1. Method of aligning at least two flexible workpiece layers, which are to be treated jointly or are to be interconnected, said layers being brought together in a position suspended by transporting means with plane surfaces and are aligned relative to each other before their mutual contact in a vertical and/or in a horizontal direction, characterised in that at least one of the workpiece layers is removed from its transporting means prior to the alignment process, is subsequently aligned into a predetermined position relative to the other workpiece layer and is transferred again to its transporting means in its aligned position, and both workpiece layers are subsequently supplied jointly for further processing by the transporting means.

2. Method according to claim 1, characterised in that both workpiece layers are removed from their respective transporting means, then aligned relative to each other with one edge or reference points of one edge parallel to a prescribed reference line and subsequently by means of movements, which are effected in opposite directions and are orientated parallel and/or perpendicularly to the reference line.

3. Method according to claim 1, characterised in that both workpiece layers are removed from their respective transporting means and then aligned relative to each other, by means of movements which are effected in opposite directions, with one edge or reference points of one edge parallel to a reference line, which forms the angle bisector of the respective initial position of these edges, and by means of movements which are likewise effected in opposite directions and are orientated parallel and perpendicularly to this reference line.

4. Method according to one of the preceding claims 1 to 3, characterised in that the workpiece layer(s) is (are) removed from the transporting means when such are in their temporary stationary position, aligned and transferred again to the transporting means.

5. Device for effecting the method according to claim 1, having at least two conveyor arrangements, which are closely adjacent each other on at least a portion of their conveyor paths and which each have a plurality of transporting means, which are disposed behind one another, e.g. are in the form of travelling carriages, each of said means being provided with clamps for securely retaining and transporting the workpiece layers in a position suspended with plane surfaces, and having a scanning and aligning station in said portion of the conveyor path, which station has arrangements for determining the relative position of the workpiece layers and arrangements, controlled thereby, for the mutual alignment of these workpiece layers, characterised by the following features:
a) the clamps (16, 17; 116, 117) at the transporting means (3; 103) of at least one conveyor arrangement (1; 101) each have a magnetisable carrier (15; 115), which is securely retained in a friction-locking manner on the associated transporting means (3; 103) by a first magnet (14; 114), which is mounted on said transporting means, and
b) the scanning and aligning station (10) has at least one aligning device (30; 130) provided with at least one second magnet (31; 131), the magnetic field of which is orientated in the opposite direction to one magnetic field of the first magnet (14; 114), and the field strength of the second magnet for transferring the carrier (15; 115) to the aligning device (30; 130) is switchable alternately with the field strength of the first magnet (14; 114), whereby the second magnet (31; 131) can be brought into a friction-locking connection with the carrier (15; 115) of the clamps (16, 17; 116, 117), is connected to setting arrangements (34, 37, 40; 134, 137, 140) and is displaceable by the latter in a vertical plane extending parallel to the portion of path of the conveyor arrangement (1; 101) situated internally of the scanning and aligning station (10).

6. Device according to claim 5, characterised in that the transporting means (3; 103) of both conveyor arrangements (1; 101) are adapted according to feature a), an aligning device (30; 130) according to feature b) being associated with each of the two conveyor arrangements (1; 101) in the scanning and aligning station (10), and the setting arrangements (34, 37, 40; 134, 137, 140) of these aligning devices (30; 130) are drivable in opposite directions to one another.

7. Device according to claim 5 or 6, characterised in that the magnets (14; 114) at the transporting means (3; 103) are each permanent magnets which are each provided with a coil for producing a magnetic field oppositely orientated to [that of] the permanent magnet.

8. Device according to claim 7, characterised in that the transporting means (3; 103), which are provided with magnets (14; 114), are provided with first electrical contact arrangements (27; 127) for the coils associated with the magnets (14; 114), and in that these contact arrangements (27; 127) can be brought into contact with second electrical contact arrangements (26; 126), which are disposed in a stationary manner in the scanning and aligning station (10).

9. Device according to claim 8, characterised in that the contact arrangements (26, 27; 126, 127) are sliding contact arrangements.

10. Device according to one of claims 5 to 9, characterised in that the holder (32; 132) of the second magnet (31; 131) is displaceably guided in a first rail (33; 133), which extends substantially vertically.

11. Device according to claim 10, characterised in that the first rail (33; 133) is displaceably guided on a transversely extending second rail (36; 136).

12. Device according to claim 11, characterised in that the second rail (36; 136) is pivotably mounted on a stationary support structure (9).

13. Device according to claims 5 to 12, characterised in that the aligning device (30; 130) is driven by an electric motor.

14. Device according to claim 13, characterised in that the setting arrangements have electric motors (34, 37, 40; 134, 137, 140), which are in the form of stepping motors.

## Revendications

1. Procédé d'orientation d'au moins deux couches de pièces d'ouvrage ne possédant pas de résistance à la flexion, à traiter en commun ou à relier ensemble, amenées l'une au-dessus de l'autre, en une position où elles pendent, avec une surface plane, à des moyens de transport, et orientées l'une par rapport à l'autre en direction verticale et/ou en direction horizontale, avant de venir en contact mutuel, caractérisé en ce qu'au moins l'une des couches de pièces d'ouvrage est détachée de son moyen de transport, avant l'orientation, puis orientée en une position relative prédéterminée par rapport à l'autre couche de pièces d'ouvrage et transférée de nouveau, en position orientée, à son moyen de transport, les deux couches de pièces d'ouvrage étant ensuite amenées conjointement à la suite du traitement à l'aide des moyens de transport.

2. Procédé selon la revendication 1, caractérisé en ce que les deux couches de pièces d'ouvrage sont détachées de leurs moyens de transport respectifs, puis orientées avec un bord, ou des points de référence d'un bord, parallèle(s) à une ligne de référence prédéterminée, puis orientées l'une par rapport à l'autre au moyens de déplacements opérés en sens inverse, parallèlement et/ou perpendiculairement à la ligne de référence.

3. Procédé selon la revendication 1, caractérisé en ce que les deux couches de pièces d'ouvrage sont détachées de leurs moyens de transport respectifs, puis orientées l'une par rapport à l'autre, par des déplacements s'opérant en sens inverse, avec un bord, ou des points de référence d'un bord, parallèle(s) à une ligne de référence constituant la bisectrice de la position initiale respective de ces bords, ainsi que par des déplacements opérés également en sens inverse, parallèlement et/ou perpendiculairement à cette ligne de référence.

4. Procédé selon l'une des revendications 1 à 3 précédentes, caractérisé en ce que la ou les couche(s) de pièces d'ouvrage, à l'arrêt provisoire des moyens de transport, sont détachés de celui-ci ou de ceux-ci, orientés et de nouveau transférée(s) à ou aux moyen(s) de transport.

5. Dispositif pour mettre en oeuvre le procédé selon la revendication 1, comportant au moins deux dispositifs de transport, disposés étroitement voisins l'un de l'autre, sur au moins une section de leur course de transport, et présentant chacun plusieurs moyens de transports, réalisés sous forme de chariots mobiles, pourvus chacun de pinces pour fixer et transporter les couches de pièces d'ouvrage en une position pendue à plat, et avec un poste d'exploration et d'orientation, dans la section citée de la course de transport, présentant des dispositifs pour déterminer la position relative des couches de pièces d'ouvrage et, à partir de là, des dispositifs commandés, en vue d'assurer une orientation mutuelle de ces couches de pièces d'ouvrage; caractérisé par les caractéristiques suivantes :
a) les pinces (16,17;116,117) situées sur les moyens de transport (3;103) d'au moins un dispositif de transport (1;101) présentent chacune un support magnétisable (15;115), fixé par friction sur le moyen de transport (3;103) afférent par un premier aimant (14;114) fixé sur celui-ci, et
b) le poste d'exploration et d'orientation (10) présente au moins un dispositif d'orientation (30;130) équipé d'au moins un deuxième aimant (31;131), dont le champ magnétique est orienté à l'opposé du champ magnétique du premier aimant (14;114) et dont l'intensité de champ est commutable, en alternance avec l'intensité de champ du premier aimant (14;114), en vue du transfert du support (15;115) au dispositif d'orientation (30;130), de telle sorte que le deuxième aimant (31;131) peut être relié par friction au support (15;115) des pinces (16,17;116,117) et relié à des dispositifs de réglage (34,37,40;134,137,140) et peut être déplacé, au moyen de ces dispositifs, dans un plan vertical, s'étendant parallèlement à la section de piste, se trouvant à l'intérieur du poste d'exploration et d'orientation (10), du dispositif de transport (1;101).

6. Dispositif selon la revendication 5, caractérisé en ce que les moyens de transport (3;103) des deux dispositifs de transport (1;101) sont configurés selon la caractéristique a), un dispositif d'orientation (30;130) selon la caractéristique b) étant associé à chacun des deux dispositifs de transport (1;101), dans le poste d'exploration et d'orientation (10), et les dispositifs de réglage (34,37,40;134,137,140) de ces dispositifs d'orientation (30;130) étant susceptibles d'être entraînés à contresens l'un par rapport à l'autre.

7. Dispositif selon la revendication 5 ou 6, caractérisé en ce que les aimants (14;114) montés sur les moyens de transport (3;103) sont chacun des aimants permanents, pourvus chacun d'une bobine pour produire un champ magnétique opposé à celui de l'aimant permanent.

8. Dispositif selon la revendication 7, caractérisé en ce que les moyens de transport (3;103) pourvus des aimants (14;114) sont pourvus de premiers dispositifs de contact électriques (27;127) pour les bobines associées aux aimants (14;114) et en ce que ces dispositifs de contact (27;127) peuvent être reliés aux deuxièmes dispositifs de contact électriques (26;126) disposés localement fixes dans le poste d'exploration et d'orientation (10).

9. Dispositif selon la revendication 8, caractérisé en ce que les dispositifs de contact (26,27;126,127) sont des dispositifs à contact à balais.

10. Dispositif selon l'une des revendications 5 à 9, caractérisé en ce que le support (32;132) du deuxième aimant (31;131) est guidé déplaçable dans une première glissière (33;133) s'étendant sensiblement verticalement.

11. Dispositif selon la revendication 10, caractérisé en ce que la première glissière (33;133) est guidée déplaçable sur une deuxième glissière (36;136) s'étendant transversalement.

12. Dispositif selon la revendication 11, caractérisé en ce que la deuxième glissière (36;136) est montée pivotante sur une structure support (9) fixe.

13. Dispositif selon les revendications 5 à 12, caractérisé en ce que le dispositif d'orientation (30;130) est en traîné par un moteur électrique.

14. Dispositif selon la revendication 13, caractérisé en ce que les dispositifs de réglage sont des moteurs électriques (34,37,40;134,137,140) réalisés sous forme de moteurs pas-à-pas.
